# EUROPÄISCHE PATENTSCHRIFT

(11) **EP 3 974 281 B1**
(45) Veröffentlichungstag und Bekanntmachung des Hinweises auf die Patenterteilung: **17.01.2024**
(21) Anmeldenummer: 21191732.3
(22) Anmeldetag: 17.08.2021
(51) Int. Cl.: B61D 23/02, B60R 3/02

(54) **ZUSTIEGEINRICHTUNG FÜR EIN FAHRZEUG**
ENTRY DEVICE FOR A VEHICLE
DISPOSITIF DE MONTÉE POUR UN VÉHICULE

(30) Priorität: 25.09.2020 DE 202020105492 U
(43) Veröffentlichungstag der Anmeldung: 30.03.2022
(73) Patentinhaber: Bode - Die Tür GmbH, 34123 Kassel (DE)
(72) Erfinder: Theis, Christoph, 34537 Bad Wildungen (DE)
(74) Vertreter: Patentanwälte Bauer Vorberg Kayser

(56) Entgegenhaltungen:
- EP-A1- 2 390 142
- WO-A1-98/36723
- WO-A1-2016/083586
- DE-A1- 19 503 079
- DE-U1-202018 102 317

## Beschreibung

Die vorliegende Erfindung betrifft eine Zustiegeinrichtung für ein Fahrzeug, insbesondere für ein Schienenfahrzeug, umfassend eine linearverschiebbar angeordnete Trittplattenanordnung, die gebildet ist aus einer Trittplatte und einer mit der Trittplatte wirkverbundenen Ausschubeinheit, sowie eine Antriebseinheit, die dazu eingerichtet ist, die aus der Trittplatte und der Ausschubeinheit gebildete Trittplattenanordnung entlang einer Verschiebeachse unter Ausführung einer Verschiebebewegung von einer eingefahrenen Stellung hin zu einer ausgefahrenen Stellung zu verschieben und umgekehrt.

Bei Fahrzeugen unterschiedlicher Art, insbesondere jedoch bei Fahrzeugen des öffentlichen Personentransports, wird auf Zustiegeinrichtungen der eingangs beschriebenen oder ähnlicher Bauart zurückgegriffen. Unter einem "Fahrzeug" kann vorliegend insbesondere ein radgebundenes oder ein schienengebundenes Fahrzeug zu verstehen sein. Bei radgebundenen Fahrzeugen kann es sich im vorliegenden Kontext insbesondere um Transportfahrzeuge für den Personenverkehr handeln, beispielsweise um Busfahrzeuge. Bei schienengebundenen Fahrzeugen kann es sich im vorliegenden Sachzusammenhang ebenfalls um Transportfahrzeuge für den Personenverkehr handeln, beispielsweise um Straßenbahnen, S-Bahnen, Züge (Regionalzüge, Fernzüge), U-Bahnen, Trams, etc. Grundsätzlich können Zustiegeinrichtungen jedoch bei Fahrzeugen jeglicher Art eingesetzt werden, bei welchen beim Ein- oder Ausstieg von Personen ein Höhenunterschied oder ein Spalt zwischen einem Haltesteig und einer Trittfläche im Innenraum des Fahrzeugs überwunden werden muss. Eine solche Situation kann beispielsweise auch beim Halten eines Flugzeugs an einem Gate bzw. Haltesteig des Gates auftreten, weshalb auch bei Flugzeugen Zustiegeinrichtungen zum Einsatz kommen können.

Entsprechend dienen Zustiegeinrichtungen der Erleichterung des Ein- und Ausstiegs in ein Fahrzeug vorbeschriebener Art. Aus dem Stand der Technik, beispielsweise der WO 2016/083586 A1 und der EP 2 390 142 A1, sind Schiebetritteinrichtungen und Klapptritteinrichtungen wohlbekannt.

Schiebetritteinrichtungen beruhen darauf, dass eine Trittplatte zwischen einer eingefahrenen und einer ausgefahrenen Stellung hin- und herbewegt wird, insbesondere entlang einer sich in Fahrzeugquerrichtung erstreckenden Verschiebeachse. In der ausgefahrenen Stellung stellt die Trittplatte eine Trittfläche bereit, über welche eine Person das Fahrzeug betreten oder aus diesem aussteigen kann. Um eine solche Linearverschiebung der Trittplatte zu gewährleisten, kann die Trittplatte mittels einer Führung in einem fahrzeugseitigen Gehäuse oder einem Rahmen linearverschiebbar geführt sein. Schiebetritte erleichtern das Ein- und Aussteigen aus einem Fahrzeug, indem sie einen zwischen dem Fahrzeug und einem Haltesteig (z.B. einer Bahnsteigkante) vorliegenden Spalt überbrücken. Klapptritte (insbesondere rampenartig ausgebildete Klapptritte) sind insbesondere dazu vorgesehen, Höhenunterschiede zwischen einem Fahrzeuginneren (z.B. einem dort vorgesehenen Fußboden) und einem Haltesteig zu überwinden, können aber auch zur Überbrückung eines Spalts zwischen Fahrzeug und Haltesteig eingesetzt werden.

Problematisch ist häufig, dass der Abstand zwischen Fahrzeug und Haltesteig nicht konstant ist, sondern je nach den baulichen Gegebenheiten des Haltesteigs, bzw. dem einer konkret vorliegenden Haltesituation variiert. Gleiches kann für eine Höhendifferenz zwischen Fahrzeug und Haltesteig gelten, sodass nebst einem möglicherweise vorliegenden Spalt auch eine bestimmte Höhendifferenz von einer ein- oder aussteigenden Person überwunden werden muss. Je nach vorliegender Höhendifferenz, kann ein Schiebetritt zwar einen zwischen dem Haltesteig und dem Fahrzeug vorliegenden Spalt überbrücken, jedoch nicht eine vorliegende Höhendifferenz ausgleichen. Entsprechend kann bei Vorsehen eines alleinigen Schiebetritts ein barrierefreier Zustieg nicht in sämtlichen Haltesituationen bzw. an sämtlichen Haltesteigen sichergestellt werden.

Entsprechend liegt der vorliegenden Erfindung die Aufgabe zugrunde, eine Zustiegeinrichtung bereitzustellen, mit welcher ein sicherer Personenzustieg bei unterschiedlichen Höhenniveaus und/oder Abständen zwischen einem Fahrzeug und einem Haltesteig gewährleistet ist, und mit welcher sich unterschiedliche Höhenniveaus und/oder Abstände flexibel überbrücken lassen.

Zur Lösung dieser Aufgabe wird eine Zustiegeinrichtung mit den Merkmalen des Anspruchs 1 vorgeschlagen.

Es ist darauf hinzuweisen, dass die in den Ansprüchen einzeln aufgeführten Merkmale in beliebiger, technisch sinnvoller Weise miteinander kombiniert werden können und weitere Ausgestaltungen der Erfindung aufzeigen. Die Beschreibung charakterisiert und spezifiziert die Erfindung insbesondere im Zusammenhang mit den Figuren zusätzlich.

Es sei ferner darauf hingewiesen, dass eine hierin verwendete, zwischen zwei Merkmalen stehende und diese miteinander verknüpfende Konjunktion "und/oder" stets so auszulegen ist, dass in einer ersten Ausgestaltung des erfindungsgemäßen Gegenstands lediglich das erste Merkmal vorhanden sein kann, in einer zweiten Ausgestaltung lediglich das zweite Merkmal vorhanden sein kann und in einer dritten Ausgestaltung sowohl das erste als auch das zweite Merkmal vorhanden sein können.

Wie erwähnt, betrifft die vorliegende Erfindung eine Zustiegeinrichtung für ein Fahrzeug, insbesondere für ein Schienenfahrzeug, umfassend eine linearverschiebbar angeordnete Trittplattenanordnung, die gebildet ist aus einer Trittplatte und einer mit der Trittplatte wirkverbundenen Ausschubeinheit, wobei die Ausschubeinheit eine erste und eine zweite Ausschubschiene aufweist, wobei die erste und zweite Ausschubschiene parallel zueinander angeordnet sind, und wobei die Trittplatte zwischen der ersten und zweiten Ausschubschiene angeordnet ist, sowie eine Antriebseinheit, die dazu eingerichtet ist, die aus der Trittplatte und der Ausschubeinheit gebildete Trittplattenanordnung entlang einer Verschiebeachse unter Ausführung einer Verschiebebewegung von einer eingefahrenen Stellung hin zu einer ausgefahrenen Stellung zu verschieben und umgekehrt. Die erfindungsgemäße Zustiegeinrichtung zeichnet sich aus durch zumindest ein Sperrmittel, das dazu eingerichtet ist, in der ausgefahrenen Stellung der Trittplattenanordnung ein Verschieben der Ausschubeinheit entlang der Verschiebeachse zu blockieren, und zugleich eine Relativbewegung zwischen der Trittplatte und der Ausschubeinheit freizugeben, in Folge dessen die Trittplatte relativ zur Ausschubeinheit verschieb- und neigbar ist.

Wesentlich für die vorliegende Erfindung ist, dass die Zustiegeinrichtung nebst der aus dem Stand der Technik wohlbekannten Schiebetrittfunktion auch eine Rampenfunktion bereitstellt, d.h. eine zwischen einem Fahrzeug und einem Haltesteig vorliegende Höhendifferenz kann durch die Zustiegeinrichtung überwunden werden, sodass auch im Falle eines unterhalb eines Fahrzeug-Fußbodenniveaus liegenden Haltesteig-Höhenniveaus ein sicherer und barrierefreier Ein- und Ausstieg in das Fahrzeug ermöglicht ist. Mit der vorliegenden Erfindung wird also eine Zustiegeinrichtung bereitgestellt, die nebst einer klassischen Schiebetrittfunktion auch eine Rampenfunktion bereitstellt.

Unter einer "Zustiegeinrichtung" ist im Sinne der Erfindung eine Einrichtung zu verstehen, vermöge dessen einer Person der Ein- oder Ausstieg in ein Fahrzeug erleichtert bzw. ermöglicht wird. Die Trittplatte wird beim Ein- oder Ausstieg gewichtsbelastet, beispielsweise durch die Trittbelastung einer zusteigenden Person.

Unter einem "Fahrzeug" kann - wie eingangs erwähnt - insbesondere ein radgebundenes oder schienengebundenes Fahrzeug zu verstehen sein. Bei radgebundenen Fahrzeugen kann es sich insbesondere um Transportfahrzeuge für den Personenverkehr handeln, beispielsweise um Busfahrzeuge. Bei schienengebundenen Fahrzeugen kann es sich ebenfalls um Transportfahrzeuge für den Personenverkehr handeln, beispielsweise um Straßenbahnen, S-Bahnen, Züge (Regionalzüge, Fernzüge), U-Bahnen, Trams, etc.

Bei der linearverschiebbar angeordneten Trittplattenanordnung handelt es sich um eine Anordnung von miteinander wirkverbundenen Komponenten, nämlich der Trittplatte und der Ausschubeinheit. Unter einer Wirkverbindung ist vorliegend zu verstehen, dass die der Trittplattenanordnung zugehörigen Komponenten, also die Trittplatte und die Ausschubeinheit, derart miteinander gekoppelt sind, dass beide Komponenten bei Ausführung einer Verschiebebewegung simultan verschiebbar sind. Dabei kann die Trittplatte die Ausschubeinheit mitnehmen oder umgekehrt. Entsprechend ist die Antriebseinheit mit der Trittplatte oder der Ausschubeinheit verbunden, sodass durch die Wirkverbindung beider Komponenten eine (zumindest mittelbare) Bewegungsübertragung auf beide Komponenten erfolgen kann, auch wenn die Antriebseinheit unmittelbar mit nur einer der Komponenten (z.B. der Trittplatte) verbunden ist. Die Wirkverbindung kann beispielsweise durch ein mechanisches Wirkverbindungsmittel oder einen Wirkverbindungsmechanismus bereitgestellt werden.

Die Ausschubeinheit ist über eine geeignete Führung, beispielsweise eine Rollen- oder Schienenführung, in einer fahrzeugseitig vorgesehenen Führungsvorrichtung linearverschiebbar geführt. Auch die Trittplatte kann, beispielsweise unterseitig, über eine Führung, beispielsweise eine Rollen- oder Schienenführung, in einer fahrzeugseitig vorgesehenen Führungsvorrichtung linearverschiebbar geführt oder angeordnet sein. Die genannte Antriebseinheit ist vorzugsweise unmittelbar mit der Trittplatte oder einem daran befestigten Bauteil, beispielsweise einem Trittplattenträger verbunden. Aufgrund der zwischen Trittplatte und Ausschubeinheit bereitgestellten Wirkverbindung kann die Ausschubeinheit bei Linearverschiebung der Trittplatte entlang der Verschiebeachse mitgenommen werden, d.h. die Antriebseinheit kann eine Linearverschiebung der Trittplatte und der Ausschubeinheit entlang der Verschiebeachse, d.h. in Richtung der ausgefahrenen Stellung oder in Richtung der eingefahrenen Stellung bewirken. Zwischen Antriebseinheit und Trittplattenanordnung kann ein mechanisches Übertragungsmittel (z.B. ein Gestänge oder ein Antriebsriemen) vorgesehen sein, welches mit der Trittplatte, einem damit verbundenen Bauteil (z.B. einem Trittplattenträger) oder der Ausschubeinheit gekoppelt ist. Bei der Antriebseinheit kann es sich insbesondere um einen elektromotorischen Antrieb handeln. Die Verschiebung der Trittplatte und der Ausschubeinheit bei Ausführung der Verschiebebewegung der Trittplattenanordnung erfolgt gleichgerichtet und simultan. Die Verschiebung der Ausschubeinheit und Trittplatte erfolgt zudem in gleicher Geschwindigkeit.

Die Trittplatte ist derart ausgebildet, dass sie beim Ein- oder Aussteigen mit dem Gewicht von einer oder mehreren Personen belastet werden kann. Dazu ist nicht zwingend erforderlich, dass die Trittplatte vollständig ausgefahren ist, denn auch in einer zwischen der eingefahrenen Stellung und der ausgefahrenen Stellung der liegenden Stellung der Trittplatte kann diese zum Einstieg verwendet, d.h. trittbelastet, werden. Je nach Abstand des Fahrzeugs (und damit der Zustiegeinrichtung) von einem Haltesteig, kann ein vollständiges Ausfahren der Trittplatte bis zur ausgefahrenen Stellung durch eine Haltesteigkante verhindert sein. In diesem Fall kann die Trittplatte auch in einer nicht vollständig ausgefahrenen Stellung trittbelastet werden. Ferner kann die Trittplatte anti-Rutsch Eigenschaften aufweisen, beispielsweise durch Ausbildung eines geeigneten Oberflächenprofils, einer geeigneten anti-Rutsch Beschichtung oder durch Verwendung einer anti-Rutsch Matte. Durch eine solche Ausgestaltung kann die Trittsicherheit einer in das Fahrzeug ein- oder aussteigenden Person weiter erhöht werden.

Wie erwähnt, weist die Zustiegeinrichtung ferner zumindest ein Sperrmittel auf, das dazu eingerichtet ist, in der ausgefahrenen Stellung der Trittplattenanordnung ein Verschieben der Ausschubeinheit entlang der Verschiebeachse zu blockieren. Die Verschiebebewegung wird dabei sowohl in Richtung der eingefahrenen Stellung als auch in Richtung der ausgefahrenen Stellung blockiert. Bei Erreichen der ausgefahrenen Stellung kann ein Auslösemechanismus aktiviert werden, wodurch das zumindest eine Sperrmittel aktiviert und somit die Blockierung der Verschiebebewegung ausgelöst wird. Dabei nimmt das Sperrmittel eine Sperrstellung ein. Gleichsam kann das Sperrmittel durch einen Lösemechanismus gelöst und in eine Öffnungsstellung verbracht werden, in welcher eine Verschiebebewegung der Trittplattenanordnung in Richtung der eingefahrenen Stellung ermöglicht wird. Vorzugsweise sind zwei Sperrmittel vorgesehen.

Nebst der beschriebenen Blockier- bzw. Sperrfunktion gibt das zumindest eine Sperrmittel - in der ausgefahrenen Stellung der Trittplattenanordnung - eine Relativbewegung zwischen der Trittplatte und der Ausschubeinheit frei. In dieser Stellung ist die Trittplatte bewegungsbezogen von der Ausschubeinheit entkoppelt. Dadurch ist die Trittplatte relativ zur Ausschubeinheit verschieb- und neigbar. Während des Verschiebens der Trittplattenanordnung (also bei Ausführung der Verschiebebewegung) ist eine Relativbewegung zwischen Trittplatte und Ausschubeinheit hingegen verhindert, d.h. es erfolgt keine Relativverschiebung bzw. Neigung der Trittplatte relativ zur Ausschubeinheit. Bei der Relativbewegung kann es sich um eine überlagerte Verschiebe- und Neigungsbewegung handeln, d.h. die Relativbewegung der Trittplatte erfolgt nach Art einer Schwenkschiebebewegung mit Neigungs- und Linearverschiebungsanteilen. Beim Halten eines Fahrzeugs an einem Haltesteig muss die Trittplatte nicht zwingend um den maximal möglichen Neigungswinkel abgeneigt werden. Da die Trittplatte - je nach Höhenniveau des Haltesteigs - auf dem Haltesteig aufliegen kann, können Haltesituationen auftreten, in denen die Trittplatte nicht um den maximal möglichen Neigungswinkel relativ zur Ausschubeinheit geneigt ist, sondern lediglich um einen Teilneigungswinkel bezogen auf eine Maximalneigung. In einem solchen Fall wird der Neigungswinkel durch die relative Vertikalposition zwischen Fahrzeug und Haltesteig festgelegt.

Die Ausschubeinheit weist eine erste und eine zweite Ausschubschiene auf, wobei die erste und zweite Ausschubschiene parallel zueinander angeordnet sind, und wobei die Trittplatte zwischen der ersten und zweiten Ausschubschiene angeordnet ist. Die erste und zweite Ausschubschiene erstrecken sich dabei entlang jeweiliger zur Verschiebeachse paralleler Ausschubschienenachsen. Bei Anordnung der Zustiegeinrichtung im Seitenbereich eines Fahrzeugs, also nicht in dessen Front- oder Heckbereich, erstrecken sich die erste und zweite Ausschubschiene somit in entlang einer Fahrzeugquerachse (sind also in Fahrzeugquerrichtung ausgerichtet). Die erste und zweite Ausschubschiene sind beabstandet (der Abstand wird durch die Trittplatte bereitgestellt) zueinander angeordnet und über eine geeignete Führung, beispielsweise eine Rollen- oder Schienenführung, in einer fahrzeugseitig vorgesehenen Führungsvorrichtung linearverschiebbar geführt. Die erste und zweite Ausschubschiene bilden erfindungsgemäß Ausschubeinheit und sind vorzugsweise aus Metall oder Kunststoff gefertigt. Bei Ausführung der Verschiebebewegung der Trittplattenanordnung erfahren die Ausschubschienen eine simultane und gleichgerichtete Verschiebebewegung.

Weitere vorteilhafte Ausgestaltungen einer erfindungsgemäßen Zustiegeinrichtung ergeben sich aus den in den Unteransprüchen angegebenen sowie den nachfolgend beschriebenen Merkmalen. Auch die in den Unteransprüchen angegebenen Merkmale seien nachfolgend beschrieben.

Nach einer weiteren Ausgestaltung der Erfindung kann bei einer mit der Erfindung vorgeschlagenen Zustiegeinrichtung vorgesehen sein, dass das Sperrmittel eine Sperrklinke ist, die an einer der Ausschubschienen schwenkbar gelagert ist, insbesondere um eine sich in Fahrzeuglängsrichtung erstreckende Schwenkachse. Die Sperrklinke ist um eine sich in Fahrzeuglängsrichtung erstreckende Schwenkachse schwenkbar, sofern die Zustiegeinrichtung im Seitenbereich des Fahrzeugs angeordnet ist, also nicht im Front- oder Heckbereich positioniert ist. Grundsätzlich ist die Sperrklinke jedoch um eine sich senkrecht zur Verschiebeachse erstreckende Schwenkachse schwenkbar, unabhängig von der Anordnungsposition der Zustiegeinrichtung am Fahrzeug. Vorzugsweise ist sowohl an der ersten Ausschubschiene als auch an der zweiten Ausschubschiene eine Sperrklinke als Sperrmittel schwenkbar gelagert. In diesem Zusammenhang sei erwähnt, dass die erste und zweite Ausschubschiene vorzugsweise gleichartig ausgebildet sind, d.h. zum Beispiel die gleiche Länge, Breite, Tiefe etc. aufweisen. Bestimmte Funktionselemente, Aussparungen, Öffnungen, Führungseinrichtungen etc. sind daher vorzugsweise an beiden Ausschubschienen vorgesehen.

Nach einer weiteren Ausgestaltung der Erfindung kann bei einer mit der Erfindung vorgeschlagenen Zustiegeinrichtung vorgesehen sein, dass die Sperrklinke einen ersten Schenkel und einen zweiten Schenkel aufweist, wobei die Schenkel in einem Winkel zueinander angeordnet sind. Der Winkel kann zwischen 70° und 100°, insbesondere jedoch bei 90° liegen. Die Schwenklagerung der Sperrklinke ist dabei vorzugsweise in einem Verbindungsabschnitt des ersten und zweiten Schenkels verwirklicht. Beispielsweise kann die jeweilige Sperrklinke an einem an der jeweiligen Ausschubschiene angeordneten Lagerbolzen schwenkbar gelagert sein, so kann der genannte Lagerbolzen in eine im Verbindungsabschnitt der Sperrklinke vorgesehene Lochöffnung eingreifen. Die Sperrklinke (samt ihrer zwei Schenkel und dem Verbindungsabschnitt) sind vorzugsweise als Flachprodukt, beispielsweise als metallisches Flachprodukt, ausgebildet.

Nach einer weiteren Ausgestaltung der Erfindung kann bei einer mit der Erfindung vorgeschlagenen Zustiegeinrichtung vorgesehen sein, dass die Trittplatte mit je einem trittplattenseitig bewegungsfest angeordneten Führungselement in einer an der ersten und zweiten Ausschubschiene ausgebildeten Führungseinrichtung linearbeweglich geführt ist. Vorzugsweise ist die genannte Führungseinrichtung also an beiden Ausschubschienen ausgebildet, dabei vorzugsweise auf gleicher Höhe und im gleichen Längsabschnitt. Die Führungselemente sind dabei jeweils in einem der jeweiligen Ausschubschiene zugewandten Abschnitt der Trittplatte angeordnet und bewegungsfest mit der Trittplatte oder einem damit verbundenen Bauteil verbunden. Das jeweilige Führungselement greift (zumindest teilweise) in die an der jeweiligen Ausschubschiene ausgebildete Führungseinrichtung ein. Im montierten Zustand sind die an den Ausschubschienen ausgebildeten Führungseinrichtungen gegenüberliegend angeordnet, gleichsam auch die Führungselemente.

Nach einer weiteren Ausgestaltung der Erfindung kann bei einer mit der Erfindung vorgeschlagenen Zustiegeinrichtung vorgesehen sein, dass die Führungseinrichtung ein sich entlang eines Ausschubschienen-Längsabschnitts erstreckendes Langloch ist, und dass das Führungselement ein Führungsbolzen ist. Entsprechend ist ein an einer der ersten Ausschubschiene zugewandten Trittplattenseite angeordneter Führungsbolzen in einem an der ersten Ausschubschiene ausgebildeten Langloch geführt bzw. greift zumindest teilweise in dieses ein. Ein an einer der zweiten Ausschubschiene zugewandten Trittplattenseite angeordneter Führungsbolzen ist in einem an der zweiten Ausschubschiene ausgebildeten Langloch geführt bzw. greift zumindest teilweise in dieses ein. Der Langlochdurchmesser kann an den Durchmesser des Führungsbolzens angepasst sein, sodass der Führungsbolzen innerhalb des Langlochs längsverschoben werden kann. Das jeweilige Langloch und/oder der jeweilige Führungsbolzen kann zur reibungsreduzierten Führung mit einem Schmiermittel geschmiert sein.

Nach einer weiteren Ausgestaltung der Erfindung kann bei einer mit der Erfindung vorgeschlagenen Zustiegeinrichtung vorgesehen sein, dass der Führungsbolzen ein Wirkverbindungsmittel zwischen der Trittplatte und der Ausschubeinheit ist. Entsprechend kann der Führungsbolzen eine Bewegungsübertragung zwischen Trittplatte und Ausschubeinheit vermitteln. Wird über die Antriebseinheit beispielsweise eine Verschiebebewegung in der Trittplatte veranlasst, so kann die Verschiebebewegung über den als Mitnehmer wirkenden Führungsbolzen auch auf die Ausschubeinheit (bzw. die Ausschubschienen) übertragen werden, sodass die Trittplatte und die Ausschubeinheit gleichzeitig eine Verschiebebewegung erfahren können.

Nach einer weiteren Ausgestaltung der Erfindung kann bei einer mit der Erfindung vorgeschlagenen Zustiegeinrichtung vorgesehen sein, dass der Führungsbolzen dazu eingerichtet ist, bei Ausführung der Verschiebebewegung der Trittplattenanordnung von der eingefahrenen hin zur ausgefahrenen Stellung an einem ersten Endabschnitt der Sperrklinke anzuschlagen und somit die Ausschubeinheit mitzunehmen. Beim Ausfahren der Trittplattenanordnung (also bei Ausführung einer Verschiebebewegung von der eingefahrenen in Richtung der ausgefahrenen Stellung) kann sich die Sperrklinke in einer Stellung befinden, in welcher ein Anschlagen des Führungsbolzens an einem ersten Endabschnitt der Sperrklinke ermöglicht bzw. verwirklicht ist. Der erste Endabschnitt der Sperrklinke kann dabei vorzugsweise ein Schenkelende eines Schenkels der Sperrklinke sein. Bei Ausführung der Verschiebebewegung erfolgt vorzugsweise keine Relativverschiebung zwischen Führungsbolzen und dem Langloch, vielmehr sind beide Funktionselemente (bis auf geringfügige, z.B. vibrationsinduzierte Bewegungstoleranzen) statisch, d.h. positionsfest, zueinander angeordnet. Durch das Anschlagen des trittplattenseitig befestigten Führungsbolzens an der ausschubschienenseitig befestigten Sperrklinke kann eine durch die Antriebseinheit auf die Trittplatte übertragene Verschiebebewegung auf die Ausschubschiene übertragen werden. Entsprechend kann unter Einsatz der Antriebseinheit eine Verschiebebewegung der Ausschubschienen (also der Ausschubeinheit) erzeugt werden.

Nach einer weiteren Ausgestaltung der Erfindung kann bei einer mit der Erfindung vorgeschlagenen Zustiegeinrichtung vorgesehen sein, dass der Führungsbolzen dazu eingerichtet ist, bei Ausführung der Verschiebebewegung der Trittplattenanordnung von der ausgefahrenen hin zur eingefahrenen Stellung an einem ersten Langlochende anzuschlagen und somit die Ausschubeinheit mitzunehmen. Bei Ausführung einer in Richtung der eingefahrenen Stellung gerichteten Verschiebebewegung schlägt der Führungsbolzen also nicht an der Sperrklinke an. Der als Mitnehmer agierende Führungsbolzen wirkt hierbei mit dem ersten Langlochende zusammen und überträgt an dieser Stelle die von der Antriebseinheit erzeugte und zunächst auf die Trittplatte übertragene Antriebskraft auch auf die jeweiligen Ausschubschienen der Ausschubeinheit, sodass diese unter Einsatz des Führungsbolzens mitgenommen werden können.

Nach einer weiteren Ausgestaltung der Erfindung kann bei einer mit der Erfindung vorgeschlagenen Zustiegeinrichtung vorgesehen sein, dass die Sperrklinke in der ausgefahrenen Stellung der Trittplattenanordnung an ein erstes fahrzeugseitig verschiebefest angeordnetes Anschlagelement anschlägt und eine Schwenkbewegung erfährt, in Folge derer die Sperrklinke mit ihrem ersten Endabschnitt an ein zweites fahrzeugseitig verschiebefest angeordnetes Anschlagelement anschlägt. Der Anschlag an das erste Anschlagelement erfolgt dabei vorzugsweise mit einem im Bereich eines zweiten Endabschnitts der Sperrklinke angeordneten Schenkelende. Da die Sperrklinke mit der Ausschubeinheit unmittelbar verbunden ist, wird durch die beschriebene Anschlagstellung einerseits eine Verschiebung der Ausschubeinheit in Richtung der eingefahrenen Stellung (maßgebend ist hier der Anschlag des ersten Endabschnitts der Sperrklinke an dem zweiten fahrzeugseitig angeordneten Anschlagelement) und andererseits über die ausgefahrene Stellung hinaus (maßgebend ist hierbei der Anschlag des zweiten Endabschnitts der Sperrklinke an dem ersten fahrzeugseitig angeordneten Anschlagelement) verhindert. Durch jene in Folge des Anschlagens der Sperrklinke an dem ersten fahrzeugseitig verschiebefest angeordneten Anschlagelement wird die Sperrklinke in eine Stellung gebracht, die eine Bewegung des Führungsbolzens entlang des Langlochs ermöglicht. Wird über die mit der Trittplatte verbundene Antriebseinheit sodann eine weitere in Richtung der ausgefahrenen Stellung gerichtete Verschiebekraft auf die Trittplatte ausgeübt, so wird die Trittplatte relativ zu der Ausschubeinheit verschoben. Der Verschiebeweg entspricht einem Verschiebeweg des Führungsbolzens von dem ersten Langlochende bis zu einem zweiten, dem ersten Langlochende gegenüberliegenden, Langlochende. Die Länge des Langlochs legt also einen Verschiebebetrag zwischen Trittplatte und Ausschubeinheit in der ausgefahrenen Stellung der Ausschubeinheit fest. Betont sei, dass die Trittplatte bei Ausführung der Trittplattenverschiebung gegenüber der Ausschubeinheit nebst der Linearverschiebung auch eine Neigungsbewegung in Bezug zu einer von der Ausschubeinheit aufgespannten Ebene erfährt, insbesondere eine abwärts gerichtete Neigungsbewegung.

Nach einer weiteren Ausgestaltung der Erfindung kann bei einer mit der Erfindung vorgeschlagenen Zustiegeinrichtung vorgesehen sein, dass der Führungsbolzen in einer maximal geneigten Stellung der Trittplatte an dem zweiten Langlochende anschlägt, wobei die Sperrklinke in dieser Stellung zugleich mit einem Lagerabschnitt an dem Führungsbolzen anliegt. Das Anschlagen des Führungsbolzens an dem zweiten Langlochende verhindert eine weitere Relativverschiebung bzw. Relativneigung der Trittplatte relativ zur - in dieser Stellung durch die Sperrklinke arretierten - Ausschubeinheit. Der Führungsbolzen stützt die Sperrklinke in dieser Stellung zusätzlich ab (durch das Anliegen der Sperrklinke an dem Führungsbolzen mit ihrem Lagerabschnitt). Vorteilhaft kann es sein, wenn eine dem Führungsbolzen zugewandte Kante des ersten Schenkels der Sperrklinke eine Anschrägung aufweist. Die Anschrägung erlaubt ein vereinfachtes Gleiten des Führungsbolzens bei der Bewegung entlang des Langlochs. Die Anschrägung ist vorzugsweise derart ausgebildet, dass sich der erste Schenkel bezogen auf eine senkrecht zur und entlang Verschiebeachse verlaufende Schnittebene ausgehend vom ersten Schenkelende (des ersten Schenkels) in Richtung des zwischen erstem und zweitem Schenkel angeordneten Verbindungsabschnitts verjüngt.

Nach einer weiteren Ausgestaltung der Erfindung kann bei einer mit der Erfindung vorgeschlagenen Zustiegeinrichtung vorgesehen sein, dass der Führungsbolzen während der Relativbewegung zwischen der Trittplatte und Ausschubeinheit entlang des Langlochs verschoben wird. Beim Anschlagen der Sperrklinke an dem ersten fahrzeugseitigen Anschlagelement in der ausgefahrenen Stellung der Trittplattenanordnung liegt der Führungsbolzen an dem ersten Langlochende an. Sofern dann die Trittplatte relativ zur Ausschubeinheit in Ausfahrrichtung verschoben und relativ zur Ausschubeinheit abgeneigt wird, wird der mit der Trittplatte verbundene Führungsbolzen entlang des Langlochs verschoben. In der maximalen Verschiebe- bzw. Neigestellung zwischen Trittplatte und Ausschubeinheit liegt der Führungsbolzen an dem zweiten Langlochende ab.

Nach einer weiteren Ausgestaltung der Erfindung kann bei einer mit der Erfindung vorgeschlagenen Zustiegeinrichtung vorgesehen sein, dass die Trittplatte über den Führungsbolzen schwenkbar gegenüber der Ausschubeinheit gelagert ist, wobei ein Verschwenken zwischen Trittplatte und Ausschubeinheit ausschließlich in der ausgefahrenen Stellung der Ausschubeinheit (d.h. der Ausschubschienen) ermöglicht ist. Insbesondere ist die Trittplatte über zwei im Seitenbereich der Trittplatte (also den jeweiligen Ausschubschienen zugewandten Seitenbereichen der Trittplatte) angeordnete Führungsbolzen schwenkbar gegenüber der Ausschubeinheit gelagert. Durch das Anschlagen des jeweiligen Führungsbolzens an dem jeweiligen zweiten Langlochende des jeweiligen Langlochs sowie durch die Arretierung der Ausschubeinheit durch die Sperrklinke(n), ist der jeweilige Führungsbolzen in der ausgefahrenen Stellung der Ausschubeinheit in seiner Längsposition festgelegt. Die Positionsfestlegung ermöglicht ein sicheres Verschwenken der Trittplatte gegenüber der Ausschubeinheit. In der genannten Stellung kann der jeweilige Führungsbolzen also innerhalb des Langlochs eine Rotationsbewegung erfahren. Die Rotationsbewegung entspricht der Neigebewegung der Trittplatte. Die jeweiligen Langlöcher stellen also nicht nur Längsführungen für die Führungsbolzen bereit, sondern auch entsprechende Schwenklager. Dadurch dass die Führungsbolzen - nebst der vorangehend beschriebenen Funktionen - auch eine Schwenklagerung für die Trittplatte bereitstellen können, kann auf das Vorsehen einer zusätzlichen Schwenklagereinrichtung verzichtet werden, die Gesamtkonstruktion kann also kompakter und mit weniger Materialeinsatz konstruiert werden.

Nach einer weiteren Ausgestaltung der Erfindung kann bei einer mit der Erfindung vorgeschlagenen Zustiegeinrichtung vorgesehen sein, dass die Trittplatte jeweils über eine Gelenkanordnung mit der ersten und zweiten Ausschubschiene verbunden ist. Die Gelenkanordnung betrifft insbesondere zwei baugleich ausgebildete Gelenkelemente, die nach Art eines länglichen oder stabförmigen Flachprodukts ausgebildet sind, und die einerseits an den Seitenbereichen der Trittplatte (also in jenen der Ausschubschienen zugewandten Bereichen der Trittplatte) und andererseits an einem vorderen, nach fahrzeugaußen gewandten, Endabschnitt der jeweiligen Ausschubschienen angelenkt sind. Beim Neigen der Trittplatte relativ zur Ausschubeinheit vermitteln die Gelenkelemente bzw. Riegel die Neigungsbewegung. Beim Abneigen der Trittplatte relativ zur Ausschubeinheit werden die Gelenkelemente ausgehend von einer zu den Ausschubschienen parallelen Stellung ebenfalls abgeneigt. Die Gelenkelemente können ein Langloch aufweisen, in welchem jeweils ein im Endbereich der Ausschubschienen angeordnetes Eingriffselement eingreift. Beim Neigen der Trittplatte relativ zur Ausschubeinheit kann das Langloch entlang des Eingriffselements gleiten. Eine solche Anlenkung der Trittplatte an der Ausschubeinheit kann nach Art eines Kurbeltriebs ausgebildet sein.

Nach einer weiteren Ausgestaltung der Erfindung kann bei einer mit der Erfindung vorgeschlagenen Zustiegeinrichtung vorgesehen sein, dass die Relativbewegung zwischen der Trittplatte und der Ausschubeinheit eine überlagerte Schwenk-Schiebebewegung ist, bei welcher die Trittplatte relativ zur Ausschubeinheit entlang der Verschiebeachse über einen einer Länge des Langlochs entsprechenden Betrag verschiebbar ist, und bei welcher die Trittplatte relativ zur Ausschubeinheit maximal um einen von den Gelenkanordnungen festgelegten maximalen Neigungswinkel neigbar ist.

Weitere Merkmale und Vorteile der Erfindung ergeben sich aus der folgenden Beschreibung nicht einschränkend zu verstehender Ausführungsbeispiele der

Erfindung, welche im Folgenden unter Bezugnahme auf die Zeichnungen näher erläutert werden. In dieser Zeichnung zeigen schematisch:
- Fig. 1: eine perspektivische Ansicht eines ersten Ausführungsbeispiels einer erfindungsgemäßen Zustiegeinrichtung, wobei sich die zugehörige Trittplattenanordnung in einer teilweise ausgefahrenen Stellung befindet;
- Fig. 2: eine perspektivische Ansicht einer erfindungsgemäßen Zustiegeinrichtung nach dem ersten Ausführungsbeispiel, wobei sich die Ausschubeinheit in einer ausgefahrenen Stellung befindet und die Trittplatte relativ zur Ausschubeinheit abgeneigt ist;
- Fig. 3: eine vergrößerte Ansicht eines Ausschnitts einer erfindungsgemäßen Zustiegeinrichtung nach dem ersten Ausführungsbeispiel im Bereich einer Ausschubschiene, wobei sich die Trittplattenanordnung in einer eingefahrenen Stellung befindet;
- Fig. 4: eine vergrößerte Ansicht eines Ausschnitts einer Zustiegeinrichtung in einer Stellung der Trittplattenanordnung nach Fig. 3,
- Fig. 5: eine vergrößerte Ansicht eines Ausschnitts einer erfindungsgemäßen Zustiegeinrichtung nach dem ersten Ausführungsbeispiel im Bereich einer Ausschubschiene, wobei sich die Ausschubeinheit in einer ausgefahrenen Stellung befindet und die Trittplatte relativ zur Ausschubeinheit abgeneigt ist;
- Fig. 6: eine perspektivische Ansicht eines Ausschnitts einer erfindungsgemäßen Zustiegeinrichtung nach einem zweiten Ausführungsbeispiel der Erfindung, wobei sich die Ausschubeinheit in einer ausgefahrenen Stellung befindet und die Trittplatte relativ zur Ausschubeinheit abgeneigt ist.

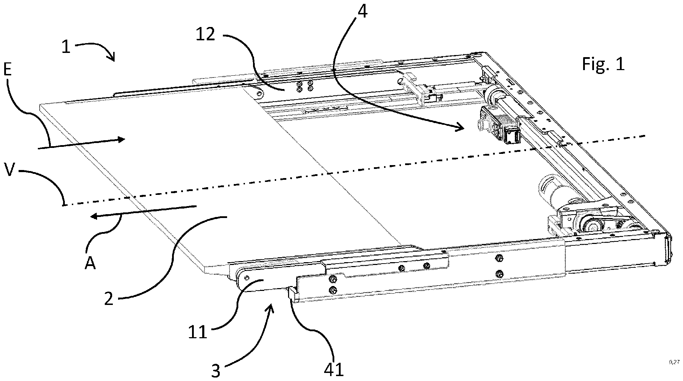

In der Fig. 1 ist in einer perspektivischen Ansicht ein erstes Ausführungsbeispiel einer erfindungsgemäßen Zustiegeinrichtung dargestellt. Die Zustiegeinrichtung wird als Ein- und Ausstieghilfe in einem Fahrzeug eingesetzt, bzw. ist in das Fahrzeug integriert. Insbesondere handelt es sich bei dem Fahrzeug um ein Schienenfahrzeug. In einem solchen Fahrzeug sind Zustiegeinrichtungen in der Regel im Seitenbereich des Fahrzeugs angeordnet, um Personen den Zustieg von einem seitlich des Fahrzeugs befindlichen Haltesteig zu ermöglichen.

Die Zustiegeinrichtung umfasst eine linearverschiebbar angeordnete Trittplattenanordnung 1, welche sich zusammensetzt aus einer Trittplatte 2 und einer mit der Trittplatte 2 wirkverbundenen Ausschubeinheit 3. Beim Ein- oder Aussteigen einer Person wird die Trittplatte 2 trittbelastet, d.h. mit der Gewichtskraft der Person beaufschlagt. Über eine Antriebseinheit 4 ist die aus der Trittplatte 2 und der Ausschubeinheit 3 gebildete Trittplattenanordnung 1 entlang einer Verschiebeachse V unter Ausführung einer Verschiebebewegung von einer eingefahrenen Stellung hin zu einer ausgefahrenen Stellung verschiebbar und umgekehrt. In der Figur 1 ist die Trittplattenanordnung 1 in einer Stellung zwischen der eingefahrenen und ausgefahrenen Stellung positioniert, also teilweise ausgefahren. Bei Ausführung der Verschiebebewegung werden beide Komponenten der Trittplattenanordnung 1 entlang der Verschiebeachse V verschoben, unabhängig von der Verschieberichtung.

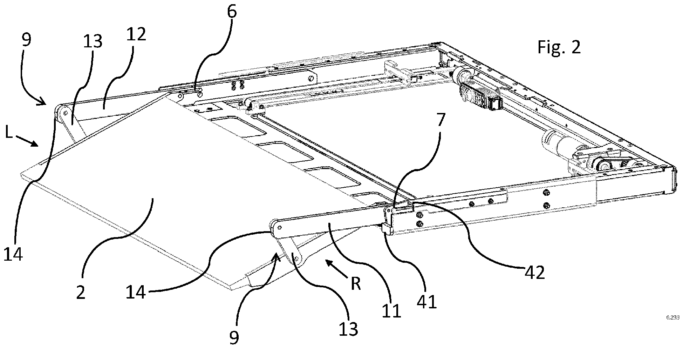

In sämtlichen Figuren ist erkennbar, dass die Ausschubeinheit 3 aus einer ersten Ausschubschiene 11 und einer zweiten Ausschubschiene 12 gebildet ist (siehe z.B. Fig. 2). Die Ausschubschienen 11, 12 sind dabei parallel und beabstandet zueinander angeordnet. Der Abstand wird durch die Trittplatte 2 bereitgestellt, die zwischen der ersten Ausschubschiene 11 und der zweiten Ausschubschiene 12 angeordnet ist. Die mit den Bezugszeichen 11 und 12 gekennzeichneten "Ausschubschienen" bilden sogenannte Seitenwangen aus, die Rahmenelemente der Ausschiebeeinheit 3 bereitstellen. Die Ausschubeinheit 3 wird mit Hilfe von Rollen geführt, wobei die Rollen in Führungsschienen eines Grundrahmens laufen.

Die Zustiegeinrichtung umfasst ein Sperrmittel, das dazu eingerichtet ist, in der ausgefahrenen Stellung der Trittplattenanordnung 1 ein Verschieben der Ausschubeinheit 3 entlang der Verschiebeachse V zu blockieren, dies gilt sowohl für ein Verschieben in Ausschubrichtung A als auch in Einschubrichtung E. Erreicht die aus den Ausschubschienen 11, 12 gebildete Ausschubeinheit 3 gemeinsam mit der Trittplatte 2 die ausgefahrene Stellung (siehe die Position der Ausschubschienen in Fig. 2), so erfolgt keine weitere Verschiebung der Ausschubschienen 11, 12 in Ausschubrichtung A. Auch wird in dieser Stellung ein Verschieben der Ausschubschienen 11, 12 in Einschubrichtung E blockiert. Die Trittplatte 2 hingegen ist - wie in der Figur 2 dargestellt - relativ zu den Ausschubschienen 11, 12 in Ausschubrichtung A über eine in der ausgefahrenen Stellung eingenommene Verschiebeposition hinaus verschieb- sowie in Bezug zu den Ausschubschienen 11, 12 neigbar. Diese aus einer Verschiebe- und Neigungsbewegung zusammengesetzte Relativbewegung zwischen der Trittplatte 2 und der Ausschubeinheit 3 (bzw. den Ausschubschienen 11, 12) wird durch das Sperrmittel bei Erreichen der Trittplattenanordnung 1 (also der Trittplatte 2 und der Ausschubeinheit 3) freigegeben.

Im Gegensatz zur Figur 1, zeigt die Figur 2 also eine Stellung, bei der sich die aus den Ausschubschienen 11, 12 gebildete Ausschubeinheit 3 in einer ausgefahrenen Stellung befindet. Die Trittplatte 2 ist gegenüber der Ausschubeinheit 3 abgeneigt, beispielsweise in Richtung eines nicht dargestellten Haltesteigs.

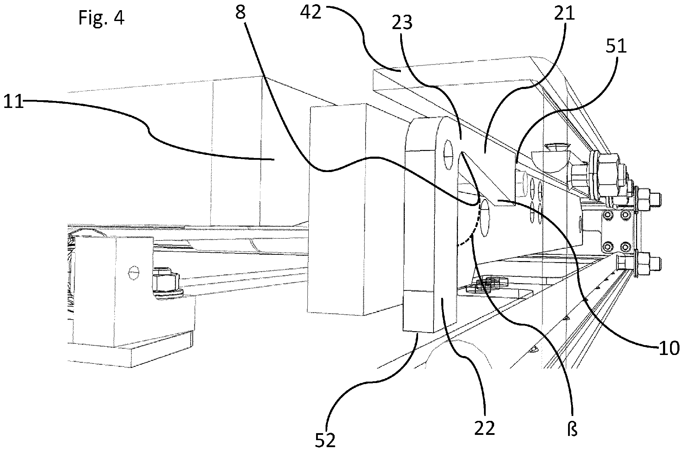

Das genannte Sperrmittel ist in Form einer Sperrklinke 5 ausgebildet, wobei vorzugsweise sowohl an der ersten Ausschubschiene 11 als auch an der zweiten Ausschubschiene 12 je eine Sperrklinke 5 schwenkbar gelagert ist. Die Schwenklagerung der Sperrklinke 5 an den Ausschubschienen 11, 12 ist besonders deutlich in den Figuren 2 - 4 zu erkennen. Dabei ist die Sperrklinke 5 um eine sich orthogonal zur Verschiebeachse V erstreckende Schwenkachse schwenkbar. Die Sperrklinke 5 weist einen ersten Schenkel 21 und einen zweiten Schenkel 22 auf, wobei die Schenkel 21, 22 - wie in Fig. 4 gekennzeichnet - in einem Winkel β zueinander angeordnet sind. Der erste Schenkel 21 weist auf seiner Unterseite eine Anschrägung 10, deren Funktion an späterer Stelle noch zu erläutern sein wird.

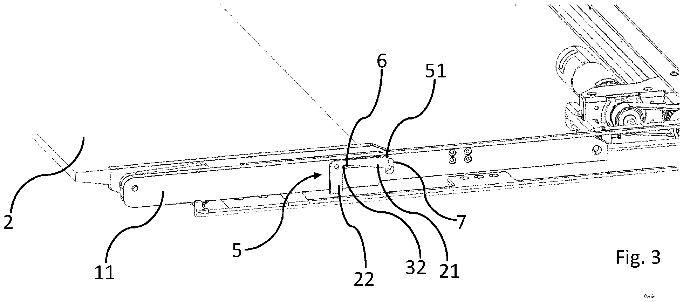

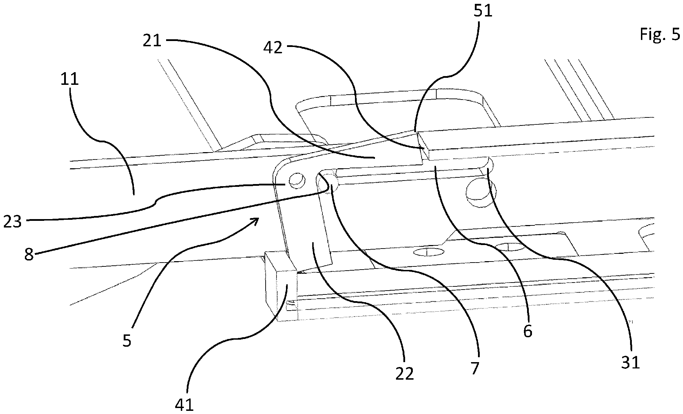

Mit der Trittplatte 2 oder einem mit der Trittplatte 2 fest verbundenen Bauteil (z.B. eine Trittplattenrahmen) ist - wie insbesondere in den Figuren 3 und 5 zu erkennen - an beiden Seitenbereichen L, E der Trittplatte 2 ein Führungsbolzen 7 verbunden. Die Führungsbolzen 7 stellen also trittplattenseitig bewegungsfest angeordnete Führungselemente dar. Ein jeweiliger Führungsbolzen 7 ist in einem jeweils an der ersten bzw. zweiten Ausschubschiene 11, 12 angeordneten Langloch 6 linearbeweglich geführt. Das Langloch 6 stellt daher eine Führungseinrichtung bereit. Wie die Figuren erkennen lassen erstreckt sich das Langloch 6 entlang eines Ausschubschienen-Längsabschnitts.

Bei Ausführung einer Verschiebebewegung der Trittplattenanordnung 1 von der eingefahrenen in Richtung der ausgefahrenen Stellung (also einer Verschiebebewegung in Ausschubrichtung A, vgl. Fig. 1) nimmt die Sperrklinke 5 eine Stellung ein, in welcher der Führungsbolzen 7 an einem ersten Endabschnitt 51 der Sperrklinke anschlägt (Fig. 3). Da die Antriebseinheit 4 unmittelbar die Verschiebebewegung auf die Trittplatte 2 überträgt, nimmt die Trittplatte 2 die Ausschubschienen 11, 12 durch die an den jeweiligen Sperrklinken 5 anschlagenden Führungsbolzen 7 bei Ausführung der Ausschub-Verschiebebewegung mit. Bei Ausführung einer Verschiebebewegung der Trittplattenanordnung 1 von der ausgefahrenen in Richtung der eingefahrenen Stellung (also einer Verschiebebewegung in Einschubrichtung E, vgl. Fig. 1) schlägt der Führungsbolzen 7 an einem ersten Langlochende 31 an (Fig. 3) und nimmt die Ausschubschienen 11, 12 (die Ausschubeinheit 3) somit mit.

Maßgeblich für die Erfindung ist, dass die Sperrklinke 5 in der ausgefahrenen Stellung der Trittplattenanordnung 1, insbesondere der Ausschubschienen 11, 12, an ein erstes fahrzeugseitig verschiebefest angeordnetes Anschlagelement 41 anschlägt (Fig. 2, 5). Der Anschlag erfolgt mit einem zweiten Endabschnitt 52 der Sperrklinke 5. Dadurch erfährt die Sperrklinke 5 eine Schwenkbewegung, in Folge derer die Sperrklinke 5 mit ihrem ersten Endabschnitt 51 an einem zweiten fahrzeugseitig verschiebefest angeordneten Anschlagelement 42 anschlägt. Durch diesen Vorgang wird eine Relativverschiebung der jeweiligen Führungsbolzen 7 in den Langlöchern 6 der jeweiligen Ausschubschienen 11, 12 freigegeben (die Fig. 5 lässt eine Längsverschiebbarkeit des Führungsbolzens 7 in dem Langloch 6 erkennen). Wird in der ausgefahrenen Stellung der Trittplattenanordnung 1 also die Ausschubeinheit 3 durch die Sperrklinke 5 in Bezug auf eine Verschiebebewegung entlang der Verschiebeachse V arretiert und wird gleichsam über die Antriebseinheit 4 eine Verschiebekraft auf die Trittplatte 2 in Ausschubrichtung A ausgeübt, so wird die Trittplatte 2 gegenüber der von den Ausschubschienen 11, 12 gebildeten Ausschubeinheit 3 verschoben. Der Verschiebeweg ist dabei durch die Länge der Langlöcher 6 begrenzt, insbesondere durch jeweilige erste und zweite Langlochenden 31, 32. Wie erwähnt, weist eine dem Führungsbolzen 7 zugewandte Kante des ersten Schenkels 21 der Sperrklinke 5 eine Anschrägung 10 auf. Die Anschrägung 10 erlaubt ein vereinfachtes Gleiten des Führungsbolzens 7 bei der Bewegung bzw. Verschiebung entlang des Langlochs 6. Die Anschrägung 10 ist derart ausgebildet, dass sich der erste Schenkel 21 bezogen auf eine senkrecht zur und entlang Verschiebeachse V verlaufende Schnittebene ausgehend vom ersten Schenkelende 21 (des ersten Schenkels) in Richtung des zwischen erstem und zweitem Schenkel 21, 22 angeordneten Verbindungsabschnitts 23 verjüngt.

Betont sei, dass die Trittplatte 2 beim Verschieben der Trittplatte 2 in Ausschubrichtung A relativ zu den Ausschubschienen 11, 12 auch eine Neigung erfährt, nämlich im Sinne eines Abschwenkens. Beim Neigen rotieren die in den Langlöchern 6 gelagerten Führungsbolzen 7 um den Neigungsbetrag mit.

In einer maximal geneigten Stellung der Trittplatte 2 schlagen die jeweiligen Führungsbolzen 7 an einem zweiten Langlochende 32 des jeweiligen Langlochs 6 an (Fig. 2, 5). In dieser Stellung liegen die jeweiligen Sperrklinken 5 mit einem jeweiligen Lagerabschnitt 8 an dem Führungsbolzen 7 an.

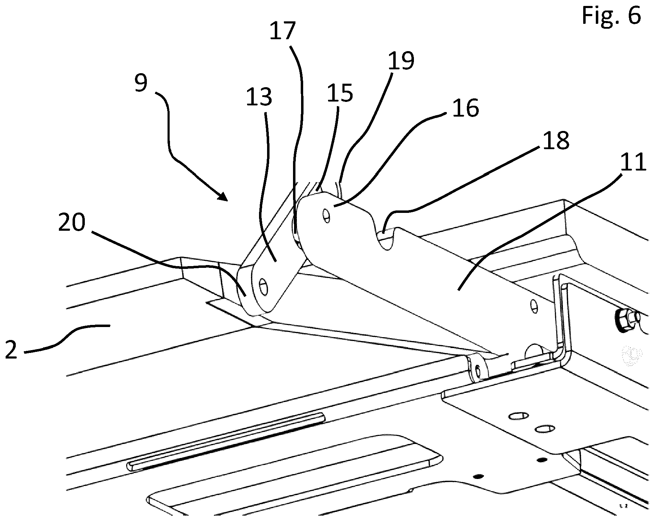

Wie insbesondere die Figuren 1 und 6 zu erkennen geben, ist die Trittplatte 2 jeweils über eine Gelenkanordnung 9 mit der ersten und der zweiten Ausschubschiene 11, 12 verbunden. Die jeweiligen Gelenkanordnungen 9 umfassen zwei baugleich ausgebildete Gelenkelemente 13, die einerseits an den Seitenbereichen L, R (siehe Fig. 2) der Trittplatte 2 (also in jenen der Ausschubschienen 11, 12 zugewandten Bereichen der Trittplatte 2) und andererseits an einem vorderen, nach fahrzeugaußen gewandten, Endabschnitt 14 der jeweiligen Ausschubschienen 11, 12 angelenkt sind. Beim Neigen der Trittplatte 2 relativ zu den Ausschubschienen 11, 12 vermitteln die Gelenkelemente 13 die Neigungsbewegung. Beim Abneigen der Trittplatte 2 werden die Gelenkelemente 13 ausgehend von einer zu den Ausschubschienen 11, 12 parallelen Stellung (Fig. 1, 3) ebenfalls abgeneigt (Fig. 2, 6).

Gemäß einem zweiten Ausführungsbeispiel der Erfindung können die Gelenkelemente 13 ein Langloch 15 aufweisen, in welchem jeweils ein im Endbereich 16 der Ausschubschienen 11, 12 angeordnetes Eingriffselement 17 eingreift. Beim Neigen der Trittplatte 2 relativ zu den Ausschubschienen 11, 12 kann das Langloch 15 relativ zum Eingriffselement 17 verschoben werden, d.h. Langloch 15 wird also gegenüber dem positionsfesten Eingriffselement 17 bewegt. Eine solche Anlenkung der Trittplatte 2 an der Ausschubeinheit 3 (den Ausschubschienen 11, 12) wirkt beim Absenken der Trittplatte 2 nach Art eines Kurbeltriebs. In der Figur 6 ist weiterhin zu erkennen, dass in der Ausschubschienen 11, 12 Lagerausnehmungen 18 ausgebildet sein können, in welche eine an den jeweiligen Gelenkelementen 13 angeordnete Lagerrolle (nicht dargestellt) in einer nicht-geneigten Stellung der Trittplatte 2 gelagert ist. Die Lagerrolle ist dabei an jenem Ende 19 des Gelenkelements 13 angeordnet, welches einem an die Trittplatte 2 angelenkten Ende 20 des Gelenkelements 13 gegenüberliegt. Bei Ausführung der Verschiebebewegung der Trittplattenanordnung 1 zwischen eingefahrener und ausgefahrener Stellung ist sind die Gelenkelemente 13 parallel zu den Ausschubschienen 11, 12 angeordnet, weshalb die erwähnte Lagerrolle in einer solchen Stellung in der Lagerausnehmung 18 gelagert ist. Die Lagerausnehmung 18 ist vorzugsweise nach Art einer Halbschale ausgebildet, sodass die Lagerrolle beim Absenken der Trittplatte 2 in einfacher Weise aus der Lagerausnehmung 18 ausfahrbar ist.

### Bezugszeichenliste

- 1: Trittplattenanordnung
- 2: Trittplatte
- 3: Ausschubeinheit
- 4: Antriebseinheit
- 5: Sperrklinke
- 6: Langloch
- 7: Führungsbolzen
- 8: Lagerabschnitt
- 9: Gelenkanordnung
- 10: Anschrägung
- 11: erste Ausschubschiene
- 12: zweite Ausschubschiene
- 13: Gelenkelement
- 14: Endabschnitt
- 15: Langloch
- 16: Endbereich
- 17: Eingriffselement
- 18: Lagerausnehmung
- 19: Ende
- 20: Ende
- 21: erster Schenkel
- 22: zweiter Schenkel
- 23: Verbindungsabschnitt
- 31: erstes Langlochende
- 32: zweites Langlochende
- 41: erstes Anschlagelement
- 42: zweites Anschlagelement
- 51: erster Endabschnitt (Sperrklinke)
- 52: zweiter Endabschnitt (Sperrklinke)
- A: Ausschubrichtung
- E: Einschubrichtung
- L: Seitenbereich
- R: Seitenbereich
- V: Verschiebeachse
- β: Winkel

## Patentansprüche

1. Zustiegeinrichtung für ein Fahrzeug, insbesondere für ein Schienenfahrzeug, umfassend
a. eine linearverschiebbar angeordnete Trittplattenanordnung (1), die gebildet ist aus einer Trittplatte (2) und einer mit der Trittplatte (2) wirkverbundenen Ausschubeinheit (3), wobei die Ausschubeinheit (3) eine erste und eine zweite Ausschubschiene (11, 12) aufweist, wobei die erste und zweite Ausschubschiene (11, 12) parallel zueinander angeordnet sind, und wobei die Trittplatte (2) zwischen der ersten und zweiten Ausschubschiene (11, 12) angeordnet ist,
b. sowie eine Antriebseinheit (4), die dazu eingerichtet ist, die aus der Trittplatte (2) und der Ausschubeinheit (3) gebildete Trittplattenanordnung (1) entlang einer Verschiebeachse (V) unter Ausführung einer Verschiebebewegung von einer eingefahrenen Stellung hin zu einer ausgefahrenen Stellung zu verschieben und umgekehrt, und
c. zumindest ein Sperrmittel, das dazu eingerichtet ist, in der ausgefahrenen Stellung der Trittplattenanordnung (1)
- ein Verschieben der Ausschubeinheit (3) entlang der Verschiebeachse (V) zu blockieren,
- und zugleich eine Relativbewegung zwischen der Trittplatte (2) und der Ausschubeinheit (3) freizugeben, in Folge dessen die Trittplatte (2) relativ zur Ausschubeinheit (3) verschieb- und neigbar ist.

2. Zustiegeinrichtung nach Anspruch 1, **dadurch gekennzeichnet, dass** das Sperrmittel eine Sperrklinke (5) ist, die an einer der Ausschubschienen (11, 12) schwenkbar gelagert ist, insbesondere um eine sich in Fahrzeuglängsrichtung erstreckende Schwenkachse.

3. Zustiegeinrichtung nach Anspruch 2, **dadurch gekennzeichnet, dass** die Sperrklinke einen ersten Schenkel (21) und einen zweiten Schenkel (22) aufweist, wobei die Schenkel (21, 22) in einem Winkel (β) zueinander angeordnet sind.

4. Zustiegeinrichtung nach einem der vorangehenden Ansprüche, **dadurch gekennzeichnet, dass** die Trittplatte (2) mit je einem trittplattenseitig bewegungsfest angeordneten Führungselement in einer an der der ersten und zweiten Ausschubschiene (11, 12) ausgebildeten Führungseinrichtung linearbeweglich geführt ist.

5. Zustiegeinrichtung nach Anspruch 4, **dadurch gekennzeichnet, dass** die Führungseinrichtung ein sich entlang eines Ausschubschienen-Längsabschnitts erstreckendes Langloch (6) ist, und dass das Führungselement ein Führungsbolzen (7) ist.

6. Zustiegeinrichtung nach Anspruch 5, **dadurch gekennzeichnet, dass** der Führungsbolzen (7) ein Wirkverbindungsmittel zwischen der Trittplatte (2) und der Ausschubeinheit (3) ist.

7. Zustiegeinrichtung nach Anspruch 6, **dadurch gekennzeichnet, dass** der Führungsbolzen (7) dazu eingerichtet ist, bei Ausführung der Verschiebebewegung der Trittplattenanordnung (1) von der eingefahrenen hin zur ausgefahrenen Stellung an einem ersten Endabschnitt (51) der Sperrklinke (5) anzuschlagen und somit die Ausschubeinheit (3) mitzunehmen.

8. Zustiegeinrichtung nach Anspruch 6 oder 7, **dadurch gekennzeichnet, dass** der Führungsbolzen (7) dazu eingerichtet ist, bei Ausführung der Verschiebebewegung der Trittplattenanordnung (1) von der ausgefahrenen hin zur eingefahrenen Stellung an einem ersten Langlochende (31) anzuschlagen und somit die Ausschubeinheit (3) mitzunehmen.

9. Zustiegeinrichtung nach Anspruch 2 oder einem der vorangehenden von Anspruch 2 abhängigen Ansprüche, **dadurch gekennzeichnet, dass** die Sperrklinke (5) in der ausgefahrenen Stellung der Trittplattenanordnung (1) an ein erstes fahrzeugseitig verschiebefest angeordnetes Anschlagelement (41) anschlägt und eine Schwenkbewegung erfährt, in Folge derer die Sperrklinke (5) mit ihrem ersten Endabschnitt (51) an ein zweites fahrzeugseitig verschiebefest angeordnetes Anschlagelement (42) anschlägt.

10. Zustiegeinrichtung nach Anspruch 5 oder einem der vorangehenden von Anspruch 5 abhängigen Ansprüche, **dadurch gekennzeichnet, dass** der Führungsbolzen (7) in einer maximal geneigten Stellung der Trittplatte (2) an einem zweiten Langlochende (32) anschlägt, wobei die Sperrklinke (5) in dieser Stellung zugleich mit einem Lagerabschnitt (8) an dem Führungsbolzen (7) anliegt.

11. Zustiegeinrichtung nach Anspruch 5 oder einem der vorangehenden von Anspruch 5 abhängigen Ansprüche, **dadurch gekennzeichnet, dass** der Führungsbolzen (7) während der Relativbewegung zwischen der Trittplatte (2) und Ausschubeinheit (3) entlang des Langlochs (6) verschoben wird.

12. Zustiegeinrichtung nach Anspruch 5 oder einem der vorangehenden von Anspruch 5 abhängigen Ansprüche, **dadurch gekennzeichnet, dass** die Trittplatte (2) über den Führungsbolzen (7) schwenkbar gegenüber der Ausschubeinheit (3) gelagert ist, wobei ein Verschwenken zwischen Trittplatte (2) und Ausschubeinheit (3) ausschließlich in der ausgefahrenen Stellung der Ausschubeinheit (3) ermöglicht ist.

13. Zustiegeinrichtung nach einem der vorangehenden Ansprüche, **dadurch gekennzeichnet, dass** die Trittplatte (2) jeweils über eine Gelenkanordnung (9) mit der ersten und zweiten Ausschubschiene (11, 12) verbunden ist.

14. Zustiegeinrichtung nach Anspruch 5 oder einem der vorangehenden von Anspruch 5 abhängigen Ansprüche, **dadurch gekennzeichnet, dass** die Relativbewegung zwischen der Trittplatte (2) und der Ausschubeinheit (3) eine überlagerte Schwenk-Schiebebewegung ist, bei welcher die Trittplatte (2) relativ zur Ausschubeinheit (3) entlang der Verschiebeachse (V) über einen einer Länge des Langlochs (6) entsprechenden Betrag verschiebbar ist, und bei welcher die Trittplatte (2) relativ zur Ausschubeinheit (3) maximal um einen von den Gelenkanordnungen (9) festgelegten maximalen Neigungswinkel neigbar ist.

## Claims

1. An access device for a vehicle, in particular for a rail vehicle, comprising
a. a linearly displaceably arranged step plate assembly (1), which consists of a step plate (2) and an ejector unit (3) operatively connected with the step plate (2), wherein the ejector unit (3) has a first and a second ejector rail (11, 12), wherein the first and second ejector rails (11, 12) are arranged parallel to each other, and wherein the step plate (2) is arranged between the first and second ejector rail (11, 12),
b. as well as a drive unit (4), which is configured to displace the step plate assembly (1) consisting of the step plate (2) and the ejector unit (3) along a displacement axis (V) while performing a displacement motion from a retracted position to an extended position and vice versa, and
c. at least one blocking means, which in the extended position of the step plate assembly (1) is configured to
- block a displacement of the ejector unit (3) along the displacement axis (V),
- while at the same time releasing a relative motion between the step plate (2) and the ejector unit (3), as a result of which the step plate (2) can be displaced and tilted relative to the ejector unit (3).

2. The access device according to claim 1, **characterized in that** a blocking means is a pawl (5), which is pivoted to one of the ejector rails (11, 12), in particular around a pivot axis extending in the longitudinal direction of the vehicle.

3. The access device according to claim 2, **characterized in that** the pawl has a first leg (21) and a second leg (22), wherein the legs (21, 22) are arranged at an angle (β) to each other.

4. The access device according to one of the preceding claims, **characterized in that** the step plate (2) is guided in a linearly displaceable manner with a respective guiding element fixedly arranged on the step plate side in a guiding device formed on the first and second ejector rail (11, 12).

5. The access device according to claim 4, **characterized in that** the guiding device is an oblong hole (6) extending along an ejector rail longitudinal section, and that the guiding element is a guiding bolt (7).

6. The access device according to claim 5, **characterized in that** the guiding bolt (7) is an operative connecting means between the step plate (2) and the ejector unit (3).

7. The access device according to claim 6, **characterized in that** the guiding bolt (7) is configured in such a way during the displacement motion of the step plate assembly (1) from the retracted toward the extended position as to hit a first end section (51) of the pawl (5), and thereby take the ejector unit (3) along.

8. The access device according to claim 6 or 7, **characterized in that** the guiding bolt (7) is configured in such a way during the displacement motion of the step plate assembly (1) from the extended toward the retracted position as to hit a first oblong hole end (31), and thereby to take the ejector unit (3) along.

9. The access device according to claim 2 or one of the preceding claims dependent on claim 2, **characterized in that** the pawl (5) hits a first stop element (41) non-displaceably arranged on a first vehicle side in the extended position of the step plate assembly (1), and a pivoting motion is imparted to the pawl, as a result of which the first end section (51) of the pawl (5) hits a second stop element (42) non-displaceably arranged on the vehicle side.

10. The access device according to claim 5 or one of the preceding claims dependent on claim 5, **characterized in that** the guiding bolt (7) hits a second oblong hole end (32) in a maximally inclined position of the step plate (2), wherein the pawl (5) simultaneously abuts against the guiding bolt (7) with a bearing section (8) in this position.

11. The access device according to claim 5 or one of the preceding claims dependent on claim 5, **characterized in that** the guiding bolt (7) is displaced along the oblong hole (6) during the relative motion between the step plate (2) and ejector unit (3).

12. The access device according to claim 5 or one of the preceding claims dependent on claim 5, **characterized in that** the step plate (2) is pivoted in relation to the ejector unit (3) via the guiding bolt (7), wherein a pivoting between the step plate (2) and ejector unit (3) is only allowed in the extended position of the ejector unit (3).

13. The access device according to one of the preceding claims 1, **characterized in that** the step plate (2) is connected with the first and second ejector rail (11, 12) via a respective joint assembly (9).

14. The access device according to claim 5 or one of the preceding claims dependent on claim 5, **characterized in that** the relative motion between the step plate (2) and the ejector unit (3) is a superposed swivel-slide motion, in which the step plate (2) can be displaced relative to the ejector unit (3) along the displacement axis (V) by an amount corresponding to a length of the oblong hole (6), and in which the step plate (2) can be inclined relative to the ejector unit (3) at most by a maximum inclination angle fixed by the joint assemblies (9).

## Revendications

1. Dispositif d'accès destiné à un véhicule, notamment à un véhicule ferroviaire, comprenant
a. un ensemble (1) de marchepied, placé en étant déplaçable de manière linéaire, qui est constitué d'un marchepied (2) et d'une unité de déployage (3) en interaction avec le marchepied (2), l'unité de déployage (3) comportant un premier et un deuxième rails de déployage (11, 12), le premier et le deuxième rails de déployage (11, 12) étant placés à la parallèle l'un de l'autre, et le marchepied (2) étant placé entre le premier et le deuxième rails de déployage (11, 12),
b. ainsi qu'une unité d'entraînement (4), qui est conçue pour déplacer l'ensemble (1) de marchepied constitué du marchepied (2) et de l'unité de déployage (3) le long d'un axe de déplacement (V), en effectuant un mouvement de déplacement d'une position escamotée vers une position déployée et inversement, et
c. et au moins un moyen d'arrêt, qui est configuré, dans la position déployée de l'ensemble (1) de marchepied
- pour bloquer un déplacement de l'unité de déployage (3) le long de l'axe de déplacement (V),
- et simultanément, pour libérer un mouvement relatif entre le marchepied (2) et l'unité de déployage (3), en conséquence de quoi, le marchepied (2) est déplaçable et inclinable par rapport à l'unité de déployage (3).

2. Dispositif d'accès selon la revendication 1, **caractérisé en ce que** le moyen d'arrêt est un cliquet d'arrêt (5), qui est logé de manière à pouvoir pivoter, notamment autour d'un axe de pivotement qui s'étend dans la direction longitudinale du véhicule, sur l'un des rails de déployage (11, 12).

3. Dispositif d'accès selon la revendication 2, **caractérisé en ce que** le cliquet d'arrêt comporte une première branche (21) et une deuxième branche (22), les branches (21, 22) étant placées sous un angle (β) l'une par rapport à l'autre.

4. Dispositif d'accès selon l'une quelconque des revendications précédentes, **caractérisé en ce que** le marchepied (2) est guidé en étant mobile de manière linéaire à l'aide de chaque fois un élément de guidage, placé en étant solidaire en mouvement du côté du marchepied dans un système de guidage conçu sur le premier et le deuxième rails de déployage (11, 12).

5. Dispositif d'accès selon la revendication 4, **caractérisé en ce que** le système de guidage est un trou oblong (6) s'étendant le long d'une section longitudinale du rail de déployage et **en ce que** l'élément de guidage est un boulon de guidage (7) .

6. Dispositif d'accès selon la revendication 5, **caractérisé en ce que** le boulon de guidage (7) est un moyen d'assemblage actif entre le marchepied (2) et l'unité de déployage (3).

7. Dispositif d'accès selon la revendication 6, **caractérisé en ce que** le boulon de guidage (7) est configuré pour buter, lors de la réalisation du mouvement de déplacement de l'ensemble (1) de marchepied de la position escamotée vers la position déployée sur un premier segment d'extrémité (51) du cliquet d'arrêt (5) et entraîner ainsi l'unité de déployage (3).

8. Dispositif d'accès selon la revendication 6 ou 7, **caractérisé en ce que** le boulon de guidage (7) est configuré pour buter, lors de la réalisation du mouvement de déplacement de l'ensemble (1) de marchepied de la position déployée vers la position escamotée sur une première extrémité (31) du trou oblong et entraîner ainsi l'unité déployage (3).

9. Dispositif d'accès selon la revendication 2 ou l'une quelconque des revendications précédentes, dépendant de la revendication 2, **caractérisé en ce que**, dans la position déployée de l'ensemble (1) de marchepied, le cliquet d'arrêt (5) bute contre un premier élément de butée (41) placé de manière solidaire en déplacement du côté du véhicule et effectue un mouvement de pivotement, suite auquel le cliquet d'arrêt (5) bute par son premier segment d'extrémité (51) sur un deuxième élément de butée (42) placé de manière solidaire en déplacement du côté du véhicule.

10. Dispositif d'accès selon la revendication 5 ou l'une quelconque des revendications précédentes, dépendant de la revendication 5, **caractérisé en ce que** dans une position d'inclinaison maximum du marchepied (2), le boulon de guidage (7) bute sur une deuxième extrémité (32) du trou oblong, dans cette position, le cliquet d'arrêt (5) s'appuyant simultanément par un segment de palier (8) sur le boulon de guidage (7).

11. Dispositif d'accès selon la revendication 5 ou l'une quelconque des revendications précédentes, dépendant de la revendication 5, **caractérisé en ce que** pendant le mouvement relatif entre le marchepied (2) et l'unité déployage (3), le boulon de guidage (7) est déplacé le long du trou oblong (6).

12. Dispositif d'accès selon la revendication 5 ou l'une quelconque des revendications précédentes, dépendant de la revendication 5, **caractérisé en ce que** le marchepied (2) est logé par l'intermédiaire du boulon de guidage (7) en étant susceptible de pivoter par rapport à l'unité déployage (3), un pivotement entre le marchepied (2) et l'unité de déployage (3) étant rendu possible exclusivement dans la position déployée de l'unité de déployage (3).

13. Dispositif d'accès selon l'une quelconque des revendications précédentes, **caractérisé en ce que** le marchepied (2) est assemblé chaque fois par l'intermédiaire d'un ensemble articulé (9) avec le premier et le deuxième rails de déployage (11, 12).

14. Dispositif d'accès selon la revendication 5 ou l'une quelconque des revendications précédentes, dépendant de la revendication 5 **caractérisé en ce que** le mouvement relatif entre le marchepied (2) et l'unité de déployage (3) est un mouvement de déplacement en pivotement superposé, lors duquel le marchepied (2) est déplaçable par rapport à l'unité de déployage (3) le long de l'axe de déplacement (V) d'une valeur correspondant à une longueur du trou oblong (6), et lors duquel le marchepied (2) est inclinable par rapport à l'unité de déployage (3) au maximum de la valeur d'un angle d'inclinaison fixé par les ensembles articulés (9).
